# EUROPÄISCHE PATENTSCHRIFT

(11) **EP 0 855 486 B1**
(45) Veröffentlichungstag und Bekanntmachung des Hinweises auf die Patenterteilung: **11.12.2002**
(21) Anmeldenummer: 98100801.4
(22) Anmeldetag: 19.01.1998
(51) Int. Cl.: E05B 65/12, B60K 15/05

(54) **Zentralverriegelungsstellelement für Türen oder Klappen von Kraftfahrzeugen**
Central locking actuator for doors or covers on motor vehicles
Actionneur pour un dispositif de verrouillage centralisé pour portes ou capots d'un véhicule automobile

(30) Priorität: 23.01.1997 DE 19702251
(43) Veröffentlichungstag der Anmeldung: 29.07.1998
(73) Patentinhaber: Hella KG Hueck & Co., 59552 Lippstadt (DE); Volkswagen Aktiengesellschaft, 38436 Wolfsburg (DE)
(72) Erfinder: Nguyen, Ngdoc Dang, 38444 Wolfsburg (DE); Muschner, Andreas, 33100 Paderborn (DE)

(56) Entgegenhaltungen:
- DE-A- 3 703 392
- DE-A- 19 612 098
- US-A- 5 044 678
- US-A- 5 222 774

## Beschreibung

Die Erfindung betrifft ein Zentralverriegelungsstellelement für Türen oder Klappen von Kraftfahrzeugen, mit einem Stellantrieb, der einen Stößel aufweist, welcher Endstellungen aufweist und mit einer Stellstange, die mit dem Stößel gekuppelt ist.

Ein derartiges Zentralverriegelungsstellelement ist aus der DE 40 32 282 A1 vorbekannt, wobei der dortige Stößel in bekannter Art und Weise mit einer Stellstange als Übertragungselement zwischen dem Stößel und einem Verriegelungselement verbunden ist. Das dortige Zentralverriegelungsstellelement weist besondere Maßnahmen auf, um einerseits den Stößel in seinen Endstellung zu verriegel und um andererseits ein Überdrücken der Stößelposition aus den Endstellungen heraus durch Druck auf den Stößel zu ermöglichen.

Diese vorbekannten Maßnahmen sind jedoch sehr aufwendig und erfordern insbesondere zusätzlichen Konstruktionsaufwand und Bauteilraum in dem Stellantrieb. Andererseits sind keine Maßnahmen angegeben, wie die Rückkehr des Stößels in die Endstellungen nach dem Entlasten des Stößel gewährleistet werden soll.

Gerade dies ist jedoch von großer Bedeutung, insbesondere bei Verwendung eines derartigen Zentralverriegelungsstellelementes für die Verriegelung beispielsweise von Tankklappen. Derartige Tankklappenverriegelungen müssen gewährleisten, daß eine Verriegelung des Kraftfahrzeuges über die Zentralverriegelung bei geöffneter Tankklappe möglich ist und daß nach Durchführung dieser Verriegelung, wenn also das Verriegelungselement in die Bewegungsbahn eines entsprechenden Verriegelungsgegenelementes hineinragt, das Schließen der Tankklappe noch möglich ist. Hierzu ist es jedoch erforderlich, daß das eigentliche Verriegelungselement durch Einwirken einer Kraft, wie sie beispielsweise die Tankklappe bei deren Zudrücken auf das Verriegelungselement ausübt, nachgibt und anschließend wieder in die Verriegelungsposition zurückgeführt wird, um die gewünschte Verriegelung, beispielsweise der Tankklappe, zu gewährleisten.

Aus der DE 196 12 098 A1 ist ein Zentralverriegelungsstellement bekannt, bei dem das Verriegelungselement - wie vorstehend beschrieben - nachgibt. Zu diesem Zweck ist dort die Stellstange zweiteilig ausgebildet, und zwar besteht sie aus einem im wesentlichen stabförmigen ersten Teil und einem hülsenförmigen zweiten Teil. Dabei sind die beiden Teile zueinander längsverschieblich miteinander verbunden, wobei in dem hülsenförmigen zweiten Teil eine Federanordnung vorgesehen ist, welche die Teile in einer ihrer Endstellungen belastet. Das hülsenförmige zweite Teile bildet gleichzeitig auch das eigentliche Verriegelungselement aus. Das stabförmige erste Teil, welches in die Hülsenöffnung des zweiten Teils eintaucht, weist Spermasen auf, die in länglichen Schlitzen des hülsenförmigen zweiten Teils geführt sind, wobei sich das erste stabförmige Stellstangenteil unter Federbelastung in einer Endstellung mittels der Spermasen gegen die Wandung der Schlitze abstützt.

Ein ungelöstes Problem bei dem Zentralverriegelungsstellement gemäß der DE 196 12 098 A1 ist jedoch die Montage und Demontage der beiden Stellstangenteile, wobei insbesondere eine lösbare Ver- und Entriegelung der beiden Teile wünschenswert ist.

Aufgabe der Erfindung ist es daher das vorstehend beschriebene Zentralverriegelungsstellement dahingehend weiterzuentwickeln, dass in einfacher Weise eine lösbare längsverschiebliche Verund Entriegelung der beiden Teile der Stellstange ermöglicht wird.

Diese Aufgabe wird erfindungsgemäß dadurch gelöst, dass das zweite, hülsenförmige Teil unter Ausbildung mindestens einer Nasenausnehmung einen Querschnitt aufweist, der geringfügig erweitert dem Querschnitt des ersten Teils im Bereich der Nase entspricht, wobei die Längsnut im hülsenförmigen zweiten Teil mit der Nasenausnehmung des Querschnitts durch mindestens eine Quernut verbunden ist.

Durch diese erfindungsgemäßen Maßnahmen wird in einfacher Weise eine Montage der beiden Stellstangenteile ermöglicht, indem das erste Teil der Stellstange in das hülsenförmige
zweite Teil der Stellstange derart eingeschoben wird, dass die Nase mit der Nasenausnehmung des Querschnitts der Hülsenöffnung zweiten Teils korrespondiert. Gegen die Kraft der Feder werden die beiden Teile soweit wie möglich ineinandergeschoben, so dass die Nase in den Bereich der Quernut gelangt. Danach können die beiden Stellstangenteile gegeneinander verdreht werden, vorzugsweise um 90°, so dass die Nase in die Längsnut gelangt. Dann können die beiden Stellstangenteile entlastet werden, wobei sie durch die Kraft der Feder so weit auseinander bewegt werden, dass die Stellstange ihre größte effektive Länge erreicht. Die Demontage der beiden Stellstangenteile erfolgt in umgekehrter Reihenfolge.

Vorteilhafte Ausgestaltung und Weiterbildung der Erfindung gehen aus den Unteransprüchen hervor.

So kann besonders vorteilhaft die Federanordnung als Schraubendruckfeder ausgebildet werden. Dies gilt insbesondere dann, wenn die Stellstange in ihrer Endstellung mit der größten Effektivlänge federbelastet werden soll.

Besonders vorteilhaft kann auch eine lagerichtige Montierhilfe der Teile der Steilstange vorgesehen sein um Falschmontierung der Stellstange zu vermeiden. In diesem Zusammenhang kann das erste Teil der Stellstange zwei längsversetzte Nasen aufweisen. Das zweite Teil der Stellstange kann dann jeweils zwei längsversetzte Längs- und Quernuten und zwei längsversetzte Nasenausnehmungen aufweisen, so daß der vorgeschriebene Verriegelungsvorgang im Falle zweier Nasen am ersten Stellstangenteil nur in einer vorgegebenen Orientierung der Stellstangenteile zueinander möglich ist.

Um nach der Verriegelung der Stellstangenteile miteinander ein ungewolltes Lösen der Stellstangenteile voneinander durch einen unerwünschten Bewegungsablauf, Verschiebung längs
der Längsnut und Verdrehung innerhalb der Quernut, zu vermeiden, ist es besonders vorteilhaft, wenn die Längsnut im Bereich der Quernut mindestens einen Absatz aufweist, so daß die Nase des ersten Stellstangenteils nur mit einigem Kraftaufwand aus der Längsnut heraus in die Quernut hereinbewegt und in der Quernut gedreht werden kann.

Weiterhin kann das erfindungsgemäße Zentralverriegelungsstellelement besonders einfach und kostengünstig gefertigt werden, wenn der erste Teil der Stellstange aus Metall und der zweite Teil der Stellstange aus Kunststoff besteht. Diese Werkstoffkombination ist an die erfindungsgemäße Kontur der Teile besonders gut angepasst, weil das erste Stellstangenteil eine vergleichsweise einfache Kontur hat und die Nase beispielsweise in eine Metallstange eingepresst werden kann. Andererseits können die beanspruchten Konturen des zweiten Stellstangenteils vorteilhaft in einem Kunststoffspritzwerkzeug realisiert werden.

Eine weitere Vereinfachung der gesamten Zentralverriegelungsanordnung, insbesondere bei Verwendung des Zentralverriegelungsstellelementes für eine Tankklappe eines Kraftfahrzeuges ergibt sich dadurch, daß der zweite Teil der Stellstange direkt ein Verriegelungselement mit einer Anlaufschräge aufweisen kann. Die Anlaufschräge gewährleistet dabei, daß das Verriegelungselement bei einem kraftbetätigten Schließen der Tankklappe in der Verriegelungsstellung des Zentralverriegelungsstellelementes nicht beschädigt werden kann.

Ein Ausführungsbeispiel des erfindungsgemäßen Zentralverriegelungsstellelementes ist in den Zeichnungen dargestellt und wird im Folgenden anhand der Zeichnungen näher beschrieben. Es zeigen
- Figur 1: ein Zentralverriegelungsstellelement für eine Tankklappe eines Kraftfahrzeuges, teilweise geschnitten;
- Figur 2: ein erstes Teil der Stellstange des Zentralverriegelungsstellelementes gemäß Figur 1;
- Figur 3: ein zweites Teil der Stellstange des Zentralverriegelungsstellelementes gemäß Figur 1 und
- Figur 4: verschiedene Ansichten Auf- und Querschnitte durch das zweite Teil der Stellstange gemäß Figur 3.

Das erfindungsgemäße Zentralverriegelungsstellelement weist einen Stellantrieb (1) auf, der im vorliegenden Ausführungsbeispiel als elektromotorischer Stellantrieb ausgebildet ist. Im Rahmen der Erfindung kann dieser Stellantrieb (1) jedoch auch als elektromagnetischer oder pneumatischer Stellantrieb ausgebildet sein. Dies ist deshalb möglich, weil alle Stellantriebe dieser Art einen Stößel (2) aufweisen, der mittels eines Koppelelementes (20) mit einer Stellstange (3) verbunden ist. Der Stößel (2) und damit die Stellstange (3) sind längs verschieblich ausgebildet, wobei die Längsverschiebung durch den Stellantrieb (1) bewirkt wird.

Die Stellstange (3) ist nach der Erfindung zweiteilig ausgebildet, mit einem ersten Teil (4) und einem zweiten Teil (5) der Stellstange (3). Zwischen diesen Stellstangenteilen (4, 5) ist eine Federanordnung (6) vorgesehen, die als Schraubendruckfeder ausgebildet ist. Die Schraubendruckfeder (6) befindet sich dabei in einer Hülsenöffnung (7) des hülsenförmig ausgebildeten zweiten Teils (5) der Stellstange (3) und stützt sich dabei einerseits an dem Hülsenboden des zweiten Teils (5) und an der Stirnseite des ersten Teils (4) der Stellstange (3) ab.

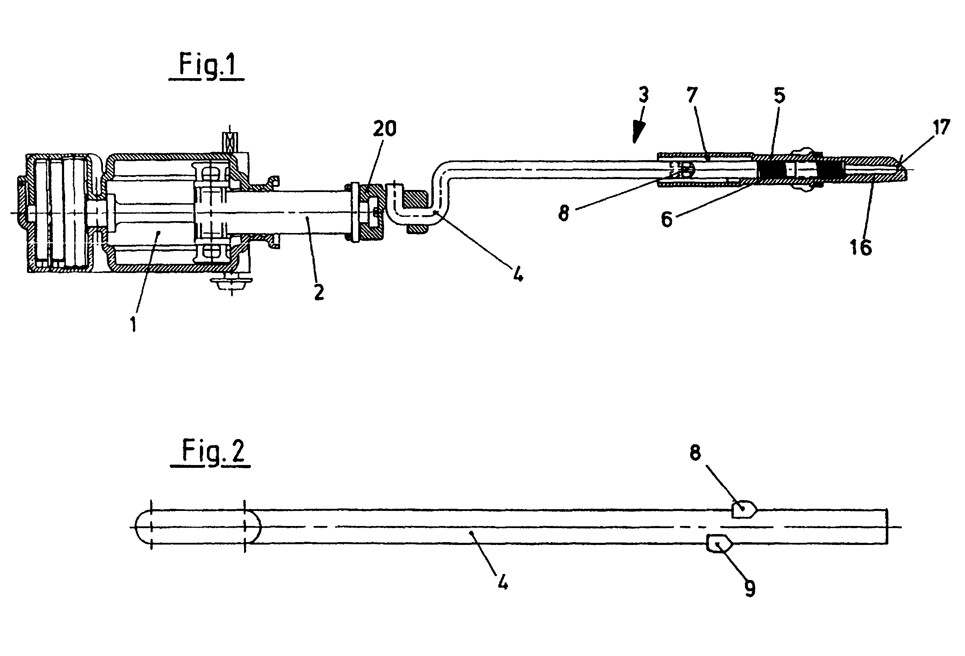

Weiterhin erkennt man in der Figur 1, daß das erste Teil (4) der Stellstange (3) mit einer ersten Nase (8) versehen ist. Der erste Teil (4) der Stellstange (3) ist dabei überwiegend stabförmig gestaltet und besteht in diesem Ausführungsbeispiel aus einem Metalldraht, in den die erste Nase (8) eingepreßt ist. Das zweite Teil (5) der Stellstange (3) ist aus Kunststoff gefertigt und einstückig mit einem Verriegelungselement (16) ausgebildet, das in ein Gegenverriegelungselement der in den Figuren nicht dargestellten Tankklappe eingreift. Um eine Beschädigung des Verriegelungselementes (16) bei einer Kraftbetätigung der Tankklappe durch den Bediener des Kraftfahrzeuges bei bereits verriegeltem Kraftfahrzeug zu vermeiden, ist das Verriegelungselement (16) mit einer Anlaufschräge (17) versehen.

In der Figur 2 erkennt man, daß das erste Teil (4) der Stellstange (3) neben der ersten Nase (8) gegenüberliegend eine zweite Nase (9) aufweist, die zu der ersten Nase (8) längs versetzt angeordnet ist.

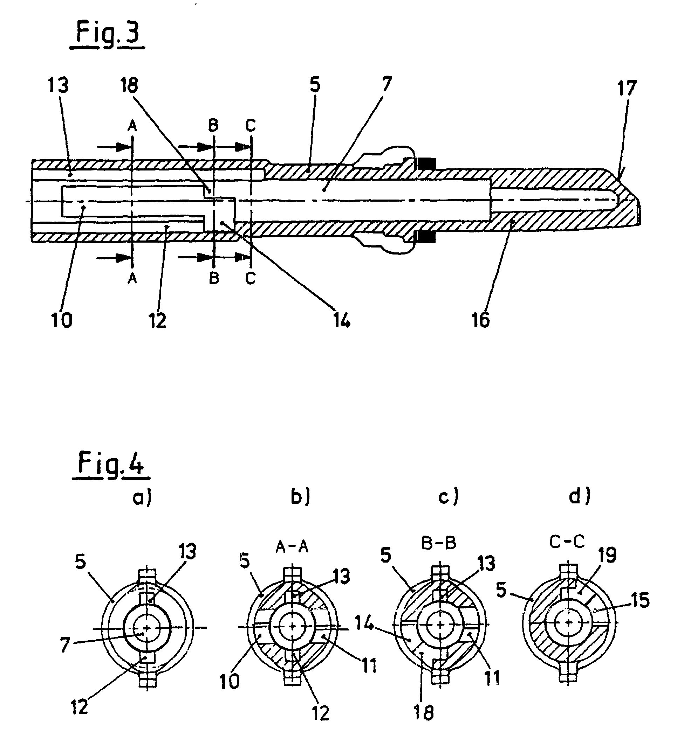

In der Figur 3 erkennt man, daß das zweite Teil (5) der Stellstange (3) neben dem Verriegelungselement (16) und der Anlaufschräge (17) eine erste Längsausnehmung (10) aufweist, die auch als Längsnut ausgebildet sein kann. In dieser Längsausnehmung (10) ist die erste Nase (8) des ersten Teils (4) der Stellstange (3) längs verschieblich, wenn die Stellstangenteile miteinander montiert sind.

In der Figur 3 nicht dargestellt liegt der ersten Längsausnehmung (10) eine zweite Längsausnehmung (11) gegenüber, die ebenfalls als Längsnut ausgebildet sein kann und gegenüber der ersten Längsausnehmung (10) entsprechend dem Versatz der Nasen (8, 9) längs versetzt ist. Weiterhin erkennt man in der Figur 3, daß das zweite Teil (5) der Stellstange (3) eine erste Nasenausnehmung (12) hat, in der die erste Nase (8) des ersten Teils (4) der Stellstange (3) zu Montagezwecken verschieblich ist. Dieser ersten Nasenausnehmung (12) liegt eine zweite Nasenausnehmung (13), mit den Nasen (8, 9) entsprechenden Längsversatz, gegenüber, wobei die Nasenausnehmungen (12, 13) gegenüber den Längsausnehmungen (10, 11) um 90° verdreht sind.

Zwischen den Längsausnehmungen (10, 11) und den Nasenausnehmungen (12, 13) sind an deren dem Verriegelungselement (16) zugewandten Ende eine erste Quernut (14) und dem gegenüber längs versetzt eine zweite Quernut (15) angeordnet, die praktisch eine Verbindung zwischen den Längsausnehmungen (10, 11) und den Nasenausnehmungen (12, 13) herstellen.

Im Bereich der Quernuten (14, 15) ist an den Längsausnehmungen (10, 11) ein erster Absatz (18) und dazu längs versetzt ein zweiter Absatz (19) vorgesehen, die ein Herausrutschen der Nasen (8, 9) aus den Längsausnehmungen (10, 11) verhindern sollen.

Die Montage der Stellstange (3) des erfindungsgemäßen Zentralverriegelungsstellelementes für Türen oder Klappen von Kraftfahrzeugen erfolgt folgendermaßen: Zuerst wird die Schraubendruckfeder (6) in die Hülsenöffnung (7) des zweiten Teils (5) der Stellstange (3) eingeschoben.

Anschließend wird das erste Teil (4) der Stellstange (3) in die Hülsenöffnung (7) des zweiten Teils (5) der Stellstange (3) derart eingeschoben, daß die Nasen (8, 9) mit den Nasenausnehmungen (12, 13) des Querschnitts der Hülsenöffnung (7) korrespondieren. Gegen die Kraft der Schraubendruckfeder (6) werden die beiden Teile (4, 5) soweit wie möglich ineinandergeschoben, so daß die Nasen (8, 9) in den Bereich der Quernuten oder Querausnehmungen (14, 15) gelangen. Danach können die beiden Stellstangenteile (4, 5) um 90° gegeneinander verdreht werden, so daß die Nasen (8, 9) in die Längsausnehmungen (10, 11) gelangen. Danach können die Stellstangenteile (4, 5) entlastet werden und durch die Kraft der Schraubendruckfeder (6) werden die Stellstangenteile (4, 5) so weit auseinander bewegt, daß die Stellstange (3) ihre größte effektive Länge erreicht und die Nasen (8, 9) an den in der Figur 3 linken Anschlägen der Längsausnehmungen (10, 11) anliegen.

Dieser beschriebene Montageablauf ist nur dann möglich, wenn die Stellstangenteile (4, 5) in der richtigen vorgegebenen Orientierung zueinander verschoben werden, weil nur dann aufgrund des bei den Nasen (8, 9) den Längsausnehmungen (10, 11), den Nasenausnehmungen (12, 13) und den Querausnehmungen (14, 15) vorgesehenen Längsversatzes der konstruktiv vorgegebene Eingriff der Nasen (8, 9) in die Querausnehmungen (14, 15) ermöglicht wird

Die beschriebenen Zusammenhänge werden insbesondere bei gemeinsamer Betrachtung der Figur 3 mit der Figur 4 deutlich. In der Figur 4a ist eine Ansicht des zweiten Teils (5) der Stellstange (3) mit Blick auf dieses zweite Teil (5) in der Figur 3 von links dargestellt, so daß der Querschnitt der Hülsenöffnung (7) mit den Nasenausnehmungen (12, 13) sichtbar wird.

In der Figur 4b ist ein Querschnitt durch das zweite Teil (5) der Stellstange (3) gemäß der Schnittlinie A-A in Figur 3 dargestellt. Dort erkennt man neben den Nasenausnehmungen (12, 13) die Längsausnehmungen (10, 11).

In der Figur 4c ist ein Schnitt durch das zweite Teil (5) der Stellstange (3) gemäß der Schnittlinie B-B in Figur 3 dargestellt. In diesem Querschnitt sind neben der zweiten Nasenausnehmung (13) und der zweiten Längsausnehmung (11) die erste Quernut (14) und der erste Absatz (18) erkennbar.

In der Figur 4d ist ein Querschnitt durch das zweite Teil (5) der Stellstange (3) gemäß der Schnittlinie C-C dargestellt. Hier ist erkennbar, daß in diesem Querschnitt nur noch die zweite Quernut (15) geschnitten ist und den Blick auf den zweiten Absatz (19) freigibt.

### Bezugszeichenliste

Zentralverriegelungsstellelement für Türen oder Klappen von Kraftfahrzeugen
- 1: Stellantrieb
- 2: Stößel
- 3: Stellstange
- 4: erstes Teil der Stellstange
- 5: zweites Teil der Stellstange
- 6: Federanordnung, Schraubendruckfeder
- 7: Hülsenöffnung
- 8: erste Nase
- 9: zweite Nase längs versetzt
- 10: erste Längsnut, Längsausnehmung
- 11: zweite Längsnut, Längsausnehmung längs versetzt
- 12: erste Nasenausnehmung
- 13: zweite Nasenausnehmung längs versetzt
- 14: erste Quernut /- ausnehmung
- 15: zweite Quernut /- ausnehmung längs versetzt
- 16: Verriegelungselement
- 17: Anlaufschräge
- 18: erster Absatz
- 19: zweiter Absatz längs versetzt
- 20: Koppelelement

## Patentansprüche

1. Zentralverriegelungsstellelement für Türen oder Klappen von Kraftfahrzeugen, mit einem Stellantrieb (1), der einen Stößel (2) aufweist, welcher Endstellungen aufweist und mit einer Stellstange (3), die mit dem Stößel (2) gekuppelt ist, wobei
- die Stellstange (3) mindestens zwei Teile (4,5) aufweist, die zueinander längsverschieblich miteinander verbunden sind,
- eine Federanordnung (6) vorgesehen ist, die die Teile (4, 5) der Stellstange (3) in einer ihrer Endstellungen belastet,
- das erste Teil (4) der Stellstange (3) Stabform aufweist,
- das zweite Teil (5) der Stellstange (3) Hülsenform aufweist,
- die Federanordnung (6) in der Hütsenöffnung (7) des zweiten Teils (5) angeordnet ist,
- das erste Teil (4) in die Hülsenöffnung (7) des zweiten Teils (5) eintaucht,
- das erste Teil (4) mindestens eine insbesondere angeformte Nase (8,9) aufweist,
- die Hülsenöffnung (7) des zweiten Teils (5) eine Längsnut (10, 11) aufweist, in der die Nase (8,9) des ersten Teils (4) längsverschieblich ist,
**dadurch gekennzeichnet, daß**
das zweite, hülsenförmige Teil (5) unter Ausbildung mindestens einer Nasenausnehmung (12, 13) einen Querschnitt aufweist, der geringfügig erweitert dem Querschnitt des ersten Teils (4) im Bereich der Nase (8, 9) entspricht, wobei die Längsnut (10, 11) mit der Nasenausnehmung (12, 13) des Querschnitts durch mindestens eine Quernut (14, 15) verbunden ist.

2. Zentralverriegelungsstellelement nach Anspruch 1,
**dadurch gekennzeichnet, dass**
die Federanordnung (6) eine Schraubendruckfeder ist.

3. Zentralverriegelungsstellelement nach Anspruch 1 oder 2,
**dadurch gekennzeichnet, dass**
die Längsnut (10, 11) als Längsausnehmung und die Quernut (14, 15) als Querausnehmung ausgebildet ist.

4. Zentralverriegelungsstellelement nach einem der vorstehenden Ansprüche,
**dadurch gekennzeichnet, dass**
das erste Teil (4) der Stellstange (3) zwei längs versetzte Nasen (8,9) aufweist und dass das zweite Teil (5) der Stellstange (3) jeweils zwei längsversetzte Längs- (10, 11) und Quernuten (14, 15) und zwei längs versetzte Nasenausnehmungen (12, 13) aufweist.

5. Zentralverriegelungsstellelement nach einem der vorstehenden Ansprüche,
**dadurch gekennzeichnet, dass**
die Längsnut (10, 11) im Bereich der Quernut (14, 15) mindestens einen Absatz (18, 19) aufweist.

6. Zentralverriegelungsstellelement nach einem der vorstehenden Ansprüche,
**dadurch gekennzeichnet, dass**
der erste Teil (4) der Stellstange (3) aus Metall und der zweite Teil (5) der Stellstange (3) aus Kunststoff besteht.

7. Zentralverriegelungsstellelement nach einem der vorstehenden Ansprüche,
**dadurch gekennzeichnet, dass**
der zweite Teil (5) der Stellstange (3) ein Verriegelungselement (16) mit einer Anlaufschräge (17) aufweist.

## Claims

1. Central locking actuator for doors, hinged covers or tailgates of vehicles, having an actuating drive (1), including a striker (2) which has end positions, and having an actuating rod (3) coupled with the striker (2), in which
- the actuating rod (3) comprises at least two parts (4, 5), which are joined together in such a way as to be longitudinally displaceable in relation to one another,
- a spring arrangement (6) is provided which loads the parts (4, 5) of the actuating rod (3) in one of its end positions,
- the first part (4) of the actuating rod (3) takes the form of a bar,
- the second part (5) of the actuating rod (3) is in the form of a sleeve,
- the spring arrangement (6) is disposed in the sleeve opening (7) of the second part (5),
- the first part (4) is inserted into the sleeve opening (7) of the second part (5),
- the first part (4) has at least one lug (8, 9) especially formed thereon,
- the sleeve opening (7) of the second part (5) has a longitudinal slot (10, 11), in which the lug (8, 9) of the first part (4) is displaceable in longitudinal direction,
**characterized in that**
the second, sleeve-shaped part (5), with formation of at least one lug recess (12, 13), has a cross-section which, with slight enlargement, corresponds to the cross-section of the first part (4) in the region of the lug (8, 9), the longitudinal slot (10, 11) being connected to the lug recess (12, 13) of the cross-section by means of at least one transverse slot (14, 15).

2. Central locking actuator according to Claim 1,
**characterized in that**
the spring arrangement (6) is a helical compression spring.

3. Central locking actuator according to Claim 1 or 2,
**characterized in that**
the longitudinal slot (10, 11) takes the form of a longitudinal recess and the transverse slot takes the form of a transverse recess.

4. Central locking actuator according to one of the preceding claims.
**characterized in that**
the first part (4) of the actuating rod (3) has two longitudinally offset lugs (8, 9), and the second part (5) of the actuating rod (3) has two longitudinally offset longitudinal slots (10, 11) and two longitudinally offset transverse slots (14, 15) as well as two longitudinally offset lug recesses (12, 13).

5. Central locking actuator according to one of the preceding claims,
**characterized in that**
the longitudinal slot (10, 11) has at least one shoulder (18, 19) in the region of the transverse slot (14, 15).

6. Central locking actuator according to one of the preceding claims,
**characterized in that**
the first part (4) of the actuating rod (3) is made of metal and the second part (5) of the actuating rod (3) is made of plastic.

7. Central locking actuator according to one of the preceding claims,
**characterized in that**
the second part (5) of the actuating rod (3) has a locking element (16) with a starting slope (17).

## Revendications

1. Elément de réglage de verrouillage central pour des portes ou des hayons de véhicules automobiles, comportant un dispositif d'entraînement de réglage (1), qui comporte un poussoir (2), qui possède des positions d'extrémité, et une barre de réglage (3), qui est couplée au poussoir (2), et dans lequel:
- la barre de réglage (3) comporte au moins deux parties (4, 5), qui sont reliées entre elles de manière à être déplaçables longitudinalement l'une par rapport à l'autre,
- il est prévu un dispositif à ressort (6), qui charge les parties (4, 5) de la barre de réglage (3) dans l'une de leurs positions d'extrémité,
- la première partie (4) de la barre de réglage (3) possède la forme d'un barreau,
- la seconde partie (5) de la barre de réglage (3) possède la forme d'une douille,
- le dispositif à ressort (6) est disposé dans l'ouverture de douille (7 de la seconde partie (5),
- la première partie (4) pénètre dans l'ouverture de douille (7) de la seconde parie (5),
- la première partie (4) comporte au moins un bec notamment moulé (8, 9),
- l'ouverture de douille (7) de la seconde partie (5) comporte une rainure longitudinale (10, 11), dans laquelle le bec (8, 9) de la première partie (4) est déplaçable longitudinalement,
**caractérisé en ce que**
la seconde partie en forme de douille (5) possède, tout en formant au moins un évidement (12, 13) pour le bec, une section transversale qui correspond, avec un léger élargissement, à la section transversale de la première partie (4) dans la zone du bec (8, 9), la rainure longitudinale (10, 11) étant reliée à l'évidement (12, 13) pour le bec de la section transversale par au moins une rainure transversale (14, 15).

2. Elément de réglage de verrouillage central selon la revendication 1, **caractérisé en ce que** le dispositif à ressort (6) est un ressort hélicoïdal de pression.

3. Elément de réglage de verrouillage central selon la revendication 1 ou 2, **caractérisé en ce que** la rainure longitudinale (10, 11) est agencée sous la forme d'un évidement longitudinal et que la rainure transversale (14, 15) est agencée sous la forme d'un évidement transversal.

4. Elément de réglage de verrouillage central selon l'une des revendications précédentes, **caractérisé en ce que** la première partie (4) de la barre de réglage (3) comporte deux becs (8, 9) décalés longitudinalement et que la seconde partie (5) de la barre de réglage (3) comprend respectivement deux rainures longitudinales (10, 11) décalées longitudinalement et deux rainures transversales (14, 15), décalées longitudinalement, et deux évidements (12, 13) décalés longitudinalement, pour les becs.

5. Elément de réglage de verrouillage central selon l'une des revendications précédentes, **caractérisé en ce que** la rainure longitudinale (10, 11) possède au moins une partie étagée (18, 19) dans la zone de la rainure transversale (14, 15).

6. Elément de réglage de verrouillage central selon l'une des revendications précédentes, **caractérisé en ce que** la première partie (4) de la barre de réglage (3) est formée d'un métal et que la seconde partie (5) de la barre de réglage (3) est formée d'une matière plastique.

7. Elément de réglage de verrouillage central selon l'une des revendications précédentes, **caractérisé en ce que** la seconde partie (5) de la barre de réglage (3) comporte un élément de verrouillage (16) possédant un biseau de montée (17).
